# EUROPEAN PATENT APPLICATION

(11) **EP 4 215 507 A1**
(43) Date of publication of application: **26.07.2023**
(21) Application number: 21954457.4
(22) Date of filing: 23.08.2021
(51) Int. Cl.: C04B 35/10, C04B 35/80, A24F 40/46

(54) **ATOMIZATION CORE STRUCTURAL MEMBER AND PREPARATION METHOD THEREFOR**

(71) Applicant: Shenzhen Anxin Precision Components Co., Ltd., Shenzhen, Guangdong 518000 (CN)
(72) Inventor: CHEN, Ping, Shenzhen, Guangdong 518000 (CN)
(74) Representative: Westphal, Mussgnug & Partner, Patentanwälte mbB
(86) International application number: PCT/CN2021/114132
(87) International publication number: WO 2023/023905

(57) **Abstract**

Disclosed are a structure of an atomizing core and a preparation method thereof. The structure of an atomizing core includes, by mass, the following raw materials: 30-50 parts of main materials, 5-20 parts of low-melting point glass powder, 0-20 parts of carbon fibers, 0-20 parts of graphene, 0-30 parts of an additive, and 0-10 parts of a binder. The number of parts of at least one of the carbon fibers, the graphene and the additive is not zero. The main materials include at least one of alumina, bauxite and corundum; the additive is an aluminium dihydrogen phosphate solution with a mass fraction of 90%. Compared with existing silicone structure member, the structure member of an atomizing core has micro-pores and high strength, can effectively prevent oil leakage and dry burning when the atomizing core is used for atomization, and can protect a cotton core mounted therein; and the structure member is easy to prepare, low in cost, and easy to form.

## Description

### FIELD

The invention relates to the technical field of atomization, in particular to a structure of an atomizing core and a preparation method thereof.

### BACKGROUND

Atomizers on the present market typically comprise a cotton atomizing core which is composed of a fiber wire or organic cotton and a heating coil. Since the cotton atomizing core is formed by winding cotton on the heating coil or wrapping the heating coil with cotton, the heating coil is not fixed on the cotton, and the cotton and the heating coil are not firmly combined with each other, so oil leakage and dry burning occur easily when the cotton atomizing core is used for atomization, which greatly affects user experience and shortens the service life of the cotton atomizing core. Structural support members of the cotton atomizing core, such as silicone plugs and silicone sleeves, have poor effect in preventing oil leakage and dry burning, and are low in strength, thus having a limited protective effect on the cotton core placed therein.

### SUMMARY

The technical issue to be solved by the invention is to provide a structure member of an atomizing core, which can better protect the atomizing core against oil leakage and dry burning, and a preparation method thereof.

The technical solution adopted by the present invention to solve the technical issue is to provide a structure member of an atomizing core, comprising, by mass, the following raw materials: 30-50 parts of main materials, 5-20 parts of low-melting point glass powder, 0-20 parts of carbon fibers, 0-20 parts of graphene, 0-30 parts of an additive, and 0-10 parts of a binder, wherein the number of parts of at least one of the carbon fibers, the graphene and the additive is not zero.

The main materials comprise at least one of alumina, bauxite and corundum; the additive is an aluminium dihydrogen phosphate solution with a mass fraction of 50%-95%.

Preferably, the granularity of the main materials is 200-2000 meshes.

Preferably, the granularity of the low-melting point glass powder is 80-600 meshes.

Preferably, the thickness of the graphene is 3 nm-9 nm.

Preferably, the granularity of the carbon fibers is 80-600 meshes.

Preferably, the binder is a solution with a mass fraction of 1%-10%, which is prepared from at least one of polyvinyl alcohol, maltodextrin, sodium polyacrylate, sodium carboxymethylcellulose and polyvinyl butyral.

Preferably, a solvent used for preparing the solution is water.

The present invention further provides a preparation method of the structure of an atomizing core, characterized by comprising the following steps:
S1: performing mixing granulation on the raw materials to form a mixture;
S2: pouring the mixture into a mold to perform dry-press forming; and
S3: sintering a preform obtained through the dry-press forming at 400°C-700°C to obtain the structure member of an atomizing core.

Preferably, during mixing granulation in s1, the additive and the binder are dropwise added.

Preferably, in S2, the pressure for dry-press forming is 0.1 MPa -10MPa, and the pressure is held for 0-5 min.

Preferably, the preform is dried at 90°C-150°C before being sintered.

According to the structure member of an atomizing core, the structure member can be formed by low-temperature sintering through the coordination of the raw materials such as the main materials and the additive. Adding of the carbon fibers and/or graphene can improve the compactness and bending strength of the structure member. The structure of an atomizing core is a ceramic structure member, which, compared with existing silicone structure member, has micro-pores and high strength, can effectively prevent oil leakage and dry burning when the atomizing core is used for atomization, and can protect a cotton core mounted therein; and the structure member is easy to prepare, low in cost, and easy to form.

### BRIEF DESCRIPTION OF THE DRAWINGS

The invention will be further described below in conjunction with accompanying drawings and embodiments. In the drawings:
FIG. 1 illustrates an SEM image of a structure member of an atomizing core according to an embodiment of the invention;
FIG. 2 illustrates an SEM image of a structure member of an atomizing core according to another embodiment of the invention.

### DESCRIPTION OF THE EMBODIMENTS

The invention provides a structure member of an atomizing core, which comprises, by mass, the following raw materials: 30-50 parts of main materials, 5-20 parts of low-melting point glass powder, 0-20 parts of carbon fibers, 0-20 parts of graphene, 0-30 parts of an additive, and 0-10 parts of a binder.

Wherein, the number of parts of at least one of the carbon fibers, the graphene and the additive is not zero; when the number of parts of the carbon fibers is not zero, the number of parts of the carbon fibers may be 3-20; when the number of parts of the graphene is not zero, the number of parts of the graphene may be 3-20; when the number of parts of the additive is not zero, the number of parts of the additive may be 5-30.

Specifically, in the raw materials of the structure member of the atomizing core, the main materials may comprise at least one of alumina, bauxite and corundum.

The binder is a solution prepared from at least one of polyvinyl alcohol, maltodextrin, sodium polyacrylate, sodium carboxymethylcellulose and polyvinyl butyral, and the mass fraction of the binder is 1%-10%. Corresponding to these materials, a solvent for preparing the solution is water, preferably distilled water.

In the aspect of granularity selection, the granularity of the main materials is 200-2000 meshes, the granularity of the low-melting point glass powder is 80-600 meshes, and the granularity of the carbon fibers is 80-600 meshes. The thickness of the graphene is 3 nm-9 nm.

In the invention, the additive is aluminium dihydrogen phosphate solution, which has a mass fraction of 50%-95%, preferably 90%.

By adding carbon fibers and/or graphene to the structure member of an atomizing core, the bending strength of the structure member is improved. Wherein, the graphene may be mixed with main material particles to wrap and intertwine the main material particles to form an anchoring mechanism, and the carbon fibers can improve the tenacity of the structure member. The aluminium dihydrogen phosphate, used as the binder, can also improve the strength of the structure member mainly because phosphoric acid or phosphate can react with the alumina, or alumina in the bauxite to form thermo-setting tridymite and cristobalite-like aluminium phosphate, which can improve the strength.

A preparation method of the structure member of an atomizing core comprises the following steps:

S1: the corresponding parts of raw materials are weighed, and then mixing granulation is performed on the raw materials to form a mixture.

Wherein, due to the binder and the additive are solutions, the additive and/or the binder are dropwise added during mixing granulation. The granulation time is 1 h-5 h, and can be properly prolonged or shortened according to the condition of the mixture.

S2: the mixture is poured into a mold to perform dry-press forming.

The pressure for the dry-press forming is 0.1 MPa-10 MPa, and the pressure is held for 0-5 min.

S3: a preform obtained by dry-pressing is sintered at 400°C-700°C to obtain the structure member of an atomizing core.

Wherein, before being sintered, the preform is dried at 90°C-150°C to remove water.

The preform is sintered in an air atmosphere, a vacuum atmosphere, or an inert gas atmosphere. The structure of an atomizing core obtained after sintering has certain compactness and strength.

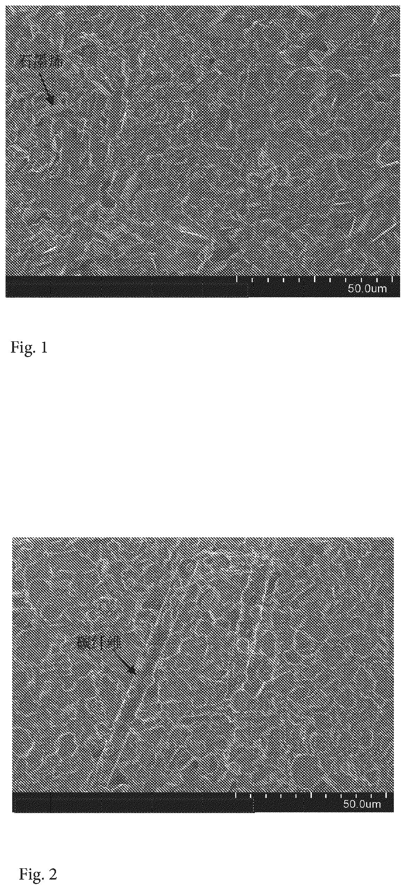

According to the preparation method, FIG. 1 illustrates an SEM image (50.0 µm) of the structure member of an atomizing core when the structure member contains graphene, and as can be seen from FIG. 1, the compactness of the structure member is greatly improved by uniformly dispersing graphene between main material particles; FIG. 2 illustrates an SEM image (50.0 µm) of the structure of an atomizing core when the structure member contains carbon fibers, and as can be seen from FIG. 2, the carbon fibers are firmly wrapped in a matrix of the structure member through sintering, which improves the tenacity of the structure member.

When the structure member of an atomizing core is prepared, a mold with a mold cavity of a corresponding shape as actually needed can be used for dry-pressing, such that the preform formed by dry-pressing corresponds to a structure member of the actually desired shape, and the structure member of the desired shape, such as a structure member of a circular cylinder shape or a structure member of a polygonal cylinder shape, can be formed after sintering.

When the structure member of an atomizing core is used, a liquid absorbent (such as a cotton core) with a heating coil is disposed in the interior of the structure member to form an integral atomizing core.

The invention is further described below with reference to specific embodiments.

### Embodiment 1:

35 parts of alumina, 15 parts of low-melting point glass powder, 4 parts of a 10% binder and 5 parts of a 90% aluminium dihydrogen phosphate solution were obtained and subjected to mixing granulation to obtain a mixture, and then the mixture was poured into a mold for dry-pressing at 0.1-10Mpa which was held for 1-2 min. A formed preform was placed in a drying oven to be dried at 90°C-150°C, and was then placed in a sintering furnace to be sintered at 660°C, such that a structure of an atomizing core was obtained.

### Embodiment 2:

Embodiment 2 is identical with Embodiment 1 except that the binder was not added.

### Embodiment 3:

Embodiment 3 is identical with Embodiment 1 except that the aluminium dihydrogen phosphate solution was replaced with 2 parts of carbon fibers.

### Embodiment 4:

Embodiment 4 is identical with Embodiment 1 except that the aluminium dihydrogen phosphate solution was replaced with 2 parts of graphene.

### Embodiment 5:

Embodiment 5 is identical with Embodiment 1 except that the binder was not added and 2 parts of carbon fibers were added.

### Embodiment 6:

30 parts of alumina, 20 parts of low-melting point glass powder, and 5 parts of a 90% aluminium dihydrogen phosphate solution were obtained and subjected to mixing granulation to obtain a mixture, and then the mixture was poured into a mold for dry-pressing at 0.1-10MPa which was held for 1-2 min; and a formed preform was placed in a drying oven to be dried at 90°C-150°C, and was then placed in a sintering furnace to be sintered at 660°C, such that a structure member of an atomizing core was obtained.

### Embodiment 7:

40 parts of alumina, 10 parts of low-melting point glass powder, and 5 parts of a 90% aluminium dihydrogen phosphate solution were obtained and subjected to mixing granulation to obtain a mixture, and then the mixture was poured into a mold for dry-pressing at 0.1-10MPa which was held for 1-2 min; and a formed preform was placed in a drying oven to be dried at 90°C-150°C, and was then placed in a sintering furnace to be sintered at 660°C, such that a structure member of an atomizing core was obtained.

### Embodiment 8:

50 parts of alumina, 5 parts of low-melting point glass powder and 10 parts of a 90% aluminium dihydrogen phosphate solution were obtained and subjected to mixing granulation to obtain a mixture, and then the mixture was poured into a mold for dry-pressing at 0.1-10MPa which was held for 1-2 min; and a formed preform was placed in a drying oven to be dried at 90°C-150°C, and was then placed in a sintering furnace to be sintered at 660°C, such that a structure member of an atomizing core was obtained.

### Comparative Example 1:

A structure member of an atomizing core was prepared by 35 parts of alumina, 15 parts of low-melting point glass powder and 4 parts of a 10% binder with reference to the method in Embodiment 1.

### Comparative Example 2:

80 parts of alumina, 15 parts of feldspar and 5 parts of lepidolite were mixed and pressed to form a preform, and then the preform was placed in a sintering furnace to be sintered at 1000°C-1200°C, such that a structure member of an atomizing core was obtained.

The compactness and bending strength of the structure members for an atomizing core obtained in Embodiments 1-8 and Comparative examples 1-2 are measured and shown in Table 1.

**Table 1**

| Embodiment | Density/% | Bending Strength/MPa |
|---|---|---|
| Embodiment 1 | 79.23 | 101.32 |
| Embodiment 2 | 75.32 | 97.60 |
| Embodiment 3 | 86.75 | 136.41 |
| Embodiment 4 | 93.61 | 193.34 |
| Embodiment 5 | 87.35 | 153.23 |
| Embodiment 6 | 80.01 | 99.68 |
| Embodiment 7 | 73.25 | 81.36 |
| Embodiment 8 | 74.67 | 87.65 |
| Comparative example 1 | 73.68 | 86.32 |
| Comparative example 2 | 72.43 | 78.63 |

It can be known from Table 1 that the compactness and bending strength of the structure members for an atomizing core obtained in Embodiments 1-8 are obviously superior to the compactness and bending strength of the structure members for an atomizing core obtained in Comparative examples 1-2, and particularly the bending strength is remarkably improved after graphene and carbon fibers are added to the structure of an atomizing core, such as Embodiments 3-5.

The above embodiments are merely illustrative ones of the invention, and are not used to limit the patent scope of the invention. All equivalent structures or equivalent flow transformations made according to the contents of the specification and drawings of the invention, or direct or indirect application to other related technical fields should also fall within the patent protection scope of the invention.

## Claims

1. A structure member of an atomizing core, **characterized by** comprising, by mass, the following raw materials: 30-50 parts of main materials, 5-20 parts of low-melting point glass powder, 0-20 parts of carbon fibers, 0-20 parts of graphene, 0-30 parts of an additive, and 0-10 parts of a binder, wherein the number of parts of at least one of the carbon fibers, the graphene and the additive is not zero;
the main materials comprise at least one of alumina, bauxite and corundum; the additive is an aluminium dihydrogen phosphate solution with a mass fraction of 50%-95%.

2. The structure member of an atomizing core according to Claim 1, **characterized in that** the granularity of the main materials is 200-2000 meshes.

3. The structure member of an atomizing core according to Claim 1, **characterized in that** the granularity of the low-melting point glass powder is 80-600 meshes.

4. The structure member of an atomizing core according to Claim 1, **characterized in that** the thickness of the graphene is 3 nm-9 nm.

5. The structure member of an atomizing core according to Claim 1, **characterized in that** the granularity of the carbon fibers is 80-600 meshes.

6. The structure member of an atomizing core according to Claim 1, **characterized in that** the binder is a solution with a mass fraction of 1%-10%, which is prepared from at least one of polyvinyl alcohol, maltodextrin, sodium polyacrylate, sodium carboxymethylcellulose and polyvinyl butyral.

7. The structure member of an atomizing core according to Claim 6, **characterized in that** a solvent used for preparing the solution is water.

8. A preparation method of the structure member of an atomizing core according to any one of Claims 1-7, **characterized by** comprising the following steps:
S1: performing mixing granulation on the raw materials to form a mixture;
S2: pouring the mixture in a mold to perform dry-press forming; and
S3: sintering a preform obtained through the dry-press forming at 400°C-700°C to obtain the structure member of an atomizing core.

9. The preparation method of the structure member of an atomizing core according to Claim 8, **characterized in that** during mixing granulation in S1, the additive and the binder are dropwise added;
in S2, the pressure for the dry-press forming is 0.1 MPa -10MPa, and the pressure is held for 0-5 min.

10. The preparation method of the structure member of an atomizing core according to Claim 8, **characterized in that** the preform is dried at 90°C-150°C before being sintered.
